# EUROPÄISCHE PATENTSCHRIFT

(11) **EP 2 896 647 B1**
(45) Veröffentlichungstag und Bekanntmachung des Hinweises auf die Patenterteilung: **01.06.2016**
(21) Anmeldenummer: 14151686.4
(22) Anmeldetag: 17.01.2014
(51) Int. Cl.: C08J 5/18, C09J 7/00, C08L 23/08, C08L 23/14

(54) **Kunststofffolie für ein Klebeband sowie Klebeband**
Plastic film for an adhesive tape and adhesive tape
Feuille en matière synthétique pour un ruban adhésif et ruban adhésif

(43) Veröffentlichungstag der Anmeldung: 22.07.2015
(73) Patentinhaber: Mondi Gronau GmbH, 48599 Gronau (DE)
(72) Erfinder: Niepelt, Ralf, 48599 Gronau (DE); Zamzow, Manfred, 48683 Ahaus (DE)
(74) Vertreter: Lorenz, Bernd Ingo Thaddeus

(56) Entgegenhaltungen:
- EP-B1- 1 847 577
- DE-A1-102006 018 351

## Beschreibung

Die Erfindung betrifft eine Kunststofffolie für ein Klebeband mit zumindest einer ersten Folienschicht, welche zumindest eine Folienoberfläche bildet. Gegenstand der Erfindung ist auch das Klebeband selbst, welches die Kunststofffolie und eine auf die erste Folienschicht aufgebrachte Beschichtung eines Haftklebstoffs aufweist.

Klebebänder sind in der Praxis für verschiedene Anwendungszwecke vorgesehen, beispielsweise um Fugen abzudecken und Teile miteinander dicht zu verbinden. So finden Klebebänder insbesondere auch im Baubereich Anwendung, um Platte oder Folien winddicht miteinander zu verbinden oder auch Fugen wasserdicht zu verschließen.

Solche Klebebänder können sowohl im Innenbereich und bei einer ausreichenden Temperaturbeständigkeit im Außenbereich eingesetzt werden, wobei das erfindungsgemäße Klebeband insbesondere auch für den Einsatz innerhalb einer Wand- und/oder Dachkonstruktion vorgesehen ist. Ein weiterer bevorzugter Einsatzzweck stellt die Abdichtung von Fugen im Sanitärbereich dar.

Für solche Anwendungen soll das Klebeband in der Regel wind- und insbesondere wasserdicht sein. Andererseits ist jedoch auch eine gewisse Wasserdampfdurchlässigkeit von Vorteil, um eine Ansammlung von Wasser und damit die Gefahr von Fäulnis oder anderer Bauschäden zu vermeiden.

In diesem Zusammenhang sind je nach Anwendungsfall unterschiedliche Einflüsse zu beachten. Einerseits kann in den durch das Klebeband miteinander verbundenen bzw. abgedichteten Teilen oder Flächen bei dem Anbringen des Klebebandes eine gewisse Feuchte oder Nässe vorhanden sein, welche dann bei einer ausreichenden Wasserdampfdurchlässigkeit durch das Klebeband hindurch abtrocknen kann. Auf diese Weise können Schäden durch die Restfeuchte, welche insbesondere an der Außenseite einer Wandkonstruktion oder im Sanitärbereich vorhanden sein kann, verhindert werden.

Andererseits ist zu berücksichtigen, dass moderne Wand- und Dachkonstruktionen häufig wasserdicht aber dennoch atmungsaktiv sind, das heißt eine gewisse Wasserdampfdurchlässigkeit aufweisen. Bei dem Einsatz des Klebebandes bei einer solchen Wand- oder Dachkonstruktion muss dieses auch eine angepasste Wasserdampfdurchlässigkeit aufweisen, um eine Kondensation und Ansammlung von Wasser unter dem Klebeband zu vermeiden.

Ein gattungsgemäßes Klebeband zur Verklebung von Folien im Bereich von Gebäudehüllen, welches eine hohe Wasserdampfdurchlässigkeit, das heißt einen geringen Diffusionswiderstand gegenüber Wasserdampf aufweist, ist aus EP 1 847 577 B1 bekannt. Das Klebeband ist aus einer Kunststofffolie und einer Beschichtung eines Haftklebstoffes gebildet, wobei die Kunststofffolie im Wesentlichen aus einer Mischung aus Ethylenvinylacetat (EVA) und einem thermoplastischen elastischen Ether-Ester-Blockcopolymer (TPE-E) besteht. Aufgrund der eingesetzten Materialien sind die Herstellungskosten für die Folie und damit für das Klebeband hoch.

Damit das Klebeband auch an Ecken, Kanten und nicht genau gerade verlaufenden Fugen leicht verarbeitet werden kann, ist eine möglichst weiche und anschmiegsame Ausgestaltung der Kunststofffolie von Vorteil, wobei diese Eigenschaften je nach Anwendungsfall auch bei niedrigen Temperaturen vorhanden sein sollen, um beispielsweise bei Frost eine einfache Verarbeitung zu ermöglichen bzw. einen Bruch des bereits verlegten Klebebandes zu vermeiden.

Der Erfindung liegt die Aufgabe zugrunde, eine Kunststofffolie für ein Klebeband anzugeben, welche sich bei geringen Herstellungskosten durch gute mechanische Eigenschaften auszeichnet. Insbesondere soll die Kunststofffolie auch eine gute und feste Verbindung mit einem Haftklebstoff ermöglichen und eine signifikante Wasserdampfdurchlässigkeit aufweisen. Des Weiteren soll ein Klebeband angegeben werden, welches aus der Kunststofffolie und Haftklebstoff gebildet ist.

Gegenstand der Erfindung und Lösung der Aufgabe sind eine Kunststofffolie gemäß Patentanspruch 1 sowie ein Klebeband gemäß Patentanspruch 13.

Ausgehend von einer Kunststofffolie mit den eingangs beschriebenen Merkmalen ist erfindungsgemäß vorgesehen, dass die erste Folienschicht eine Mischung aus einem thermoplastischen Polyolefin-Elastomer (TPE-O) und mit Maleinsäureanhydrid gepfropftem Ethylenvinylacetat (EVA-MAH) aufweist.

Erfindungsgemäß wird die Kunststofffolie auf der Basis von Polyolefin gebildet, wodurch sich gegenüber Ether-Ester-Blockcopolymer (TPE-E) geringere Materialkosten ergeben. Darüber hinaus können Polyolefine auch vergleichsweise leicht verarbeitet und extrudiert werden, wobei für die erfindungsgemäße Kunststofffolie auch eine Blasfolienextrusion in Betracht kommt.

Vorzugsweise ist die Kunststofffolie nicht nur auf des Basis von Polyolefin gebildet, sondern auch frei von vergleichsweise teuren und schwerer zu verarbeitenden Bestandteilen wie Ether-Ester-Blockcopolymer (TPE-E). Besonders bevorzugt ist vorgesehen, dass die erste Folienschicht vollständig aus thermoplastischem Polyolefin-Elastomer (TPE-O), insbesondere Polypropylen-Copolymer (PP-CO), mit Maleinsäureanhydrid gepfropftem Ethylenvinylacetat (EVA-MAH) und Rest Zusatzstoffe besteht, so dass dann die Kunststofffolie rein auf der Basis von Polyolefinen einschließlich Ethylenvinylacetat gebildet ist.

Als Zusatzstoffe kommen beispielsweise Kreide, färbende Partikel wie Weißbatch, UV-Stabilisatoren, Gleitmittel, Antiblockmittel, Füllstoffe oder dergleichen in Betracht, wobei die Zusatzstoffe in der Regel mit einem Mengenanteil von weniger als 20 Gew.-% und vorzugsweise weniger als 15 Gew.-%, beispielsweise 10 Gew.-% enthalten sind.

Vorzugsweise ist ein mehrphasiges, vergleichsweise weiches Polypropylen-Copolymer, insbesondere ein Polypropylin-Randomcopolymer vorgesehen, welches aus Propylen, Ethylen und/oder Ethylen-α-Olefinen gebildet sein kann. Ein aufgrund seiner Eigenschaften geeignetes Polypropylen-Copolymer kann durch eine Nachpolymerisation von Polypropylen mit einem Propylen-Ethylen-Gemisch hergestellt werden. Entsprechend geeignete Polypropylen-Copolymere werden in der Praxis auch als hochmodifizierte Polypropylen-Copolymere ("highly modified polypropylene copolymere") bezeichnet. Dazu wird vorzugsweise ein mehrstufiger Copolymerisationsprozess in mehreren Reaktoren durchgeführt. Insbesondere können bei den einzelnen Stufen unterschiedliche Anteile an Propylen, Ethylen sowie N-Buten zugeführt werden.

Geeignete thermoplastische Polyolefin-Elastomere werden beispielsweise unter dem Handelsnamen Vistamaxx, Versify , Infuse, Adflex oder Hifax vertrieben.

Da das Polypropylen-Copolymer vergleichsweise weich ist, weist dieses auch ein niedriges E-Modul von weniger als 400 Mpa (Megapascal) gemäß Iso178 auf. Bevorzugt beträgt das E-Modul zwischen 20 und 400 Mpa, besonders bevorzugt zwischen 80 und 100 Mpa.

Im Rahmen einer bevorzugten Ausgestaltung der Erfindung weist das thermoplastische Polyolefin-Elastomer bei Raumtemperatur eine Härte von weniger als 40 Shore D auf. Die Bestimmung der Härte erfolgt im Rahmen der Erfindung gemäß der EN ISO 868:2003-10.

Ein weiteres Maß für die mechanischen Eigenschaften des thermoplastischen Polyolefin-Elastomers ist das Biegemodul nach DIN EN ISO 178:2006-04. Gemäß der vorliegenden Erfindung liegt das Biegemodul des thermoplastischen Polyolefin-Elastomers vorzugsweise zwischen 290 MPa und 370 MPa. Bei den angegebenen Eigenschaften ist die erste Folienschicht vergleichsweise weich und anschmiegsam, so dass ein mit der Kunststofffolie gebildetes Klebeband sind gut an die abzudichtenden Flächen bzw. an die miteinander zur verbindenden Teile anlegen kann. Das thermoplastische Polyolefin-Elastomer kann, wie zuvor erläutert, auch aus einem Polypropylen-Randomcopolymer (PP-RC) gebildet sein oder als Polypropylen-Copolymer-Mischung ein Polypropylen-Randomcopolymer enthalten.

Weiterer Bestandteil der ersten Folienschicht ist das mit Maleinsäureanhydrid gepfropfte Ethylenvinylacetat (EVA-MAH), welches eine besonders gute Verankerung eines Haftklebstoffes ermöglicht. Insbesondere bei einer Beschichtung der zumindest eine Folienoberfläche bildenden ersten Folienschicht mit einem Butyl-Dispersionsklebstoff kann einer besonders gute und gegenüber dem Stand der Technik signifikant verbesserte Haftung bei Nässe erreicht werden.

Der Anteil des mit Maleinsäureanhydrid gepfropften Ethylenvinylacetates und des thermoplastischen Polyolefin-Elastomers in der ersten Folienschicht kann jeweils in einem Bereich zwischen zwischen 30 und 65 Gew.-% liegen. Damit kann in der ersten Folienschicht das Massenverhältnis von thermoplastischem Polyolefin-Elastomer und mit Maleinsäureanhydrid gepfropftem Ethylenvinylacetat (EVA-MAH) beispielsweise zwischen 2:1 und 1:2 liegen, wobei die beiden Bestandteil insbesondere auch zu etwa gleichen Anteilen vorhanden sein können.

Obwohl die Wasserdampfdurchlässigkeit von thermoplastischem Polyolefin-Elastomer, insbesondere Polypropylen gering ist, kann durch die erfindungsgemäß in der ersten Folienschicht vorhandene Polymermischung eine signifikante Wasserdampfdurchlässigkeit erreicht werden.

Die Kunststofffolie ist bevorzugt als Monofolie ausgebildet und besteht damit nur aus der ersten Folienschicht. Darüber hinaus sind aber auch Ausgestaltungen mit zumindest einer weiteren Folienschicht möglich, wobei dann der Haftklebstoff auf die erste Folienschicht aufgebracht ist. Als weitere Folienschicht kann beispielsweise eine dünne Release-Schicht vorgesehen sein, welche gegenüberliegend der ersten Folienschicht eine zweite Folienoberfläche bildet und eine verringerte Haftung gegenüber dem Haftklebstoff aufweist, so dass das Klebeband ohne eine separate, abziehbare Release-Folie zu einer Rolle aufgerollt und auch von der Rolle abgezogen werden kann.

Die Kunststofffolie zeichnet sich vorzugsweise auch bei niedrigen Temperaturen, beispielsweise bei Frost, durch eine gute Dehnbarkeit und Anschmiegsamkeit aus. Besonders bevorzugt weist die Kunststofffolie auch eine gewisse Elastizität auf, damit diese unter Zug besonders glatt und faltenfrei appliziert werden kann, wobei durch die Elastizität auch bei einer Bewegung der miteinander verbundenen Teile ein gewisser Ausgleich erreicht werden kann, ohne dass die Klebeverbindung beeinträchtigt wird.

Andererseits weist die Kunststofffolie auch eine relativ hohe Temperaturbeständigkeit von beispielsweise 150 °C und insbesondere 160 °C auf. Unter Temperaturbeständigkeit wird im Rahmen der Erfindung verstanden, dass die Kunststofffolie bis zu der angegebenen Temperatur nicht aufschmilzt und auch ansonsten keine wesentlichen, bleibenden Veränderungen, wie einer signifikanten Schrumpfung, unterworfen ist. Insbesondere kann bei einer in dem beschriebenen Maße temperaturbeständigen Kunststofffolie die Beschichtung mit dem Haftklebstoff auch ohne Weiteres bei einer erhöhten Temperatur von beispielsweise 110 °C erfolgen.

Die mechanischen Eigenschaften können des Weiteren auch durch die konkrete Abmischung der Materialien der Kunststofffolie verändert werden. So kann den thermoplastischen Polyolefin-Elastomer beispielsweise auch ein Polypropylen-Blockcopolymer zugegeben werden, um abhängig von den jeweiligen Erfordernissen die Anschmiegsamkeit herabzusetzen und die Temperaturbeständigkeit des Materials zu erhöhen. Auch andere Beimischungen können unter Berücksichtigung des jeweiligen Anwendungsfalls bzw. Einsatzzweckes vorgesehen sein.

Die Dicke der Kunststofffolie liegt vorzugsweise zwischen 40 und 140 Mikrometer (µm), besonders bevorzugt zwischen 60 und 100 Mikrometer.

Gegenstand der Erfindung ist auch ein Klebeband mit der zuvor beschriebenen Kunststofffolie und mit einer auf der ersten Folienschicht aufgebrachten Beschichtung eines Haftklebstoffs.

Da die erste Folienschicht eine signifikante Durchlässigkeit für Wasserdampf aufweist, kann im Rahmen der Erfindung auch ein Klebeband mit einer guten Wasserdampfdurchlässigkeit angegeben werden, insbesondere wenn die Kunststofffolie als Monofolie ausschließlich aus der ersten Folienschicht gebildet ist. So ist gemäß einer bevorzugten Ausgestaltung der Erfindung vorgesehen, dass das gesamte Klebeband eine Wasserdampfdurchlässigkeit zwischen 4 und 12 g/(m²d), insbesondere zwischen 5 und 10 g/(m²d) bei 23 °C und 90 % Luftfeuchtigkeit gemäß DIN 53122 aufweist.

Wie bereits zuvor erläutert, kann als Haftklebstoff insbesondere ein Butyl-Dispersionsklebstoff vorgesehen sein, welcher einerseits eine zuverlässige, feste Verbindung mit der Kunststofffolie gewährleistet und sich zusätzlich in Verbindung mit dem mit Maleinsäureanhydrid gepfropften Ethylenvinylacetat durch eine gute Nasshaftung, das heißt eine gute Kleberverankerung bei Nässe auszeichnet.

Erfindungsgemäß ergibt sich damit eine besonders vorteilhafte Kombination von Eigenschaften. Durch die verbesserte Nasshaftung kann das Klebeband auch eingesetzt werden, wenn die miteinander zu verbindenden Teile bzw. die mit dem Klebeband abzudeckenden Flächen vollständig trocken bzw. ausgetrocknet sind. Nässe oder Feuchte können insbesondere an einer Fassade aufgrund von Regen oder Kondensation oder auch im Sanitärbereich vorhanden sein. Darüber hinaus kann eine Restfeuchte auch noch in noch nicht vollständig ausgehärteten Baumaterialien wie Beton vorhanden sein, welche mit Wasser abbinden. Durch die verbesserte Nasshaftung muss ein vollständiges Ab- bzw. Austrocknen nicht abgewertet werden, wobei auch die Gefahr eine unzureichenden Verbindung bzw. Abdichtung verringert wird.

Da das Klebeband auch eine gewisse Wasserdampfdurchlässigkeit aufweisen kann, können die von dem Klebeband abgedeckten Flächen bzw. verbundenen Teile auch noch nach dem Aufbringen des Klebebandes weiter trocknen, so dass gleichzeitig auch jegliche Bauschäden oder Beeinträchtigungen durch die zunächst noch vorhandene Feuchtigkeit vermieden werden können.

Gemäß einer bevorzugten Ausgestaltung der Erfindung ist vorgesehen, dass innerhalb einer von dem Haftklebstoff gebildeten Schicht Verstärkungsfäden angeordnet sind. Je nach der zu erwartenden Beanspruchung können die Verstärkungsfäden in einer Längs- und/oder Querrichtung verlaufen, wobei insbesondere auch ein Gewebe von Verstärkungsfäden in Betracht kommt, welches beispielsweise ein Maschenweite zwischen 3 und 5 Millimetern (mm) aufweisen kann.

Aus der mit dem Haftklebstoff beschichteten Kunststofffolie können Klebebänder in Form von Streifen mit einer gewünschten Breite von beispielsweise 30 mm bis 300 mm abgetrennt werden.

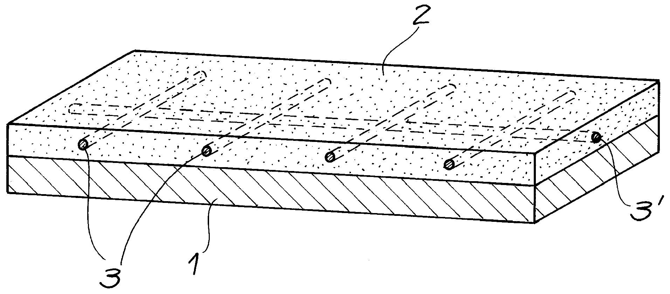

Die Erfindung wird im Folgenden anhand einer lediglich ein Ausführungsbeispiel darstellenden Zeichnung erläutert. Die einzige Figur zeigt schematisch den Aufbau eines erfindungsgemäßen Klebebandes in einem Schnitt.

Die einzige Figur zeigt ein Klebeband mit einer Kunststofffolie, die in dem Ausführungsbeispiel aus einer einzigen Folienschicht 1 als Monofolie durch Blasfolienextrusion gebildet ist. Auf einer Oberfläche der Folienschicht 1 ist ein Haftklebstoff 2 angeordnet, wobei innerhalb des Haftklebstoffs 2 ein Gitter aus sich senkrecht kreuzenden Verstärkungsfäden 3, 3' angeordnet ist.

Die aus der einzigen Folienschicht 1 gebildete Monofolie weist beispielsweise eine Dicke von 75 µm auf und besteht zu gleichen Anteilen von 45 Gew.-% aus einem weichen, mehrphasigen Polypropylen-Copolymer (PP-CO) mit einer Härte von weniger als 40 Shore D und einem mit Maleinsäureanhydrid gepfropften Ethylenvinylacetat (EVA-MAH), wobei als Rest Zusatzstoffe in Form von Kreide, Weißbach, UV-Stabilisatoren, Gleitmittel und Antiblockmittel mit einem Anteil von 10 Gew.-% vorgesehen sind.

Als Haftklebstoff 2 ist im Rahmen des Ausführungsbeispiels ein Butyl-Dispersionsklebstoff vorgesehen, der bei einer Temperatur von etwa 100 °C bis 110 °C auf die Folienschicht 1 aufgebracht wird.

Durch den Einsatz des Polypropylen-Copolymer als ein Hauptbestandteil der Kunststofffolie weist kann diese relativ leicht und kostengünstig hergestellt werden, wobei das Klebeband gleichzeitig sehr gute mechanische Eigenschaften wie eine hohe Elastizität und Anschmiegsamkeit auch bei niedrigen Temperaturen aufweist. Gleichzeitig zeichnet sich das Klebeband durch eine gute Nasshaftung sowie eine signifikanten Wasserdampfdurchlässigkeit von 6,6 g/(m²d) bei 23 °C und 90 % Luftfeuchtigkeit gemäß DIN 53122 aus.

## Patentansprüche

1. Kunststofffolie für ein Klebeband mit zumindest einer ersten Folienschicht (1), welche zumindest eine Folienoberfläche bildet, **dadurch gekennzeichnet, dass** die erste Folienschicht (1) eine Mischung aus einem thermoplastischen Polyolefin-Elastomer (TPE-O) und mit Maleinsäureanhydrid gepfropftem Ethylenvinylacetat (EVA-MAH) aufweist.

2. Kunststofffolie nach Anspruch 1, **dadurch gekennzeichnet, dass** als thermoplastisches Polyolefin-Elastomer (TPE-O) ein Polypropylen-Copolymer (PP-CO), insbesondere ein Polypropylen-Randomcopolymer (PP-RC) vorgesehen ist.

3. Kunststofffolie nach Anspruch 1 oder 2, **dadurch gekennzeichnet, dass** das thermoplastische Polyolefin-Elastomer (TPE-O) ein E-Modul gemäß ISO 178 von weniger als 400 Mpa (Megapascal) aufweist.

4. Kunststofffolie nach einem der Ansprüche 1 bis 3, **dadurch gekennzeichnet, dass** die erste Folienschicht (1) aus Polypropylen-Copolymer (PP-CO), mit Maleinsäureanhydrid gepfropftem Ethylenvinylacetat (EVA-MAH) und Rest Zusatzstoffe besteht.

5. Kunststofffolie nach einem der Ansprüche 1 bis 4, **dadurch gekennzeichnet, dass** diese als Monofolie ausgebildet ist.

6. Kunststofffolie nach einem der Ansprüche 1 bis 5, **gekennzeichnet durch** eine Dicke zwischen 40 und 140 Mikrometer (µm).

7. Kunststofffolie nach einem der Ansprüche 1 bis 6, **dadurch gekennzeichnet, dass** der Anteil von thermoplastischem Polyolefin-Elastomer (TPE-O) in der ersten Folienschicht (1) zwischen 30 und 65 Gew.-% beträgt.

8. Kunststofffolie nach einem der Ansprüche 1 bis 7, **dadurch gekennzeichnet, dass** der Anteil von mit Maleinsäureanhydrid gepfropftem Ethylenvinylacetat (EVA-MAH) in der ersten Folienschicht (1) zwischen 30 und 65 Gew.-% beträgt.

9. Kunststofffolie nach einem der Ansprüche 1 bis 8, **dadurch gekennzeichnet, dass** in der ersten Folienschicht (1) das Massenverhältnis von thermoplastischem Polyolefin-Elastomer (TPE-O) und mit Maleinsäureanhydrid gepfropftem Ethylenvinylacetat (EVA-MAH) zwischen 2:1 und 1:2 liegt.

10. Kunststofffolie nach einem der Ansprüche 1 bis 9, **dadurch gekennzeichnet, dass** das thermoplastische Polyolefin-Elastomer (TPE-O) bei Raumtemperatur eine Härte von weniger als 40 Shore D aufweist.

11. Kunststofffolie nach einem der Ansprüche 1 bis 10, **dadurch gekennzeichnet, dass** diese durch Blasfolienextrusion gebildet ist.

12. Kunststofffolie nach einem der Ansprüche 1 bis 11, **gekennzeichnet durch** eine Temperaturbeständigkeit bis 150 °C.

13. Klebeband mit einer Kunststofffolie nach einem der Ansprüche 1 bis 12 und mit einer auf der ersten Folienschicht (1) aufgebrachten Beschichtung eines Haftklebstoffs (2).

14. Klebeband nach Anspruch 13, **gekennzeichnet durch** eine Wasserdampfdurchlässigkeit zwischen 4 und 12 g/(m²d) bei 23 °C und 90 % Luftfeuchtigkeit gemäß DIN 53122.

15. Klebeband nach Anspruch 13 oder 14, **dadurch gekennzeichnet, dass** der Haftklebstoff (2) ein Butyl-Dispersionsklebstoff ist.

16. Klebeband nach einem der Ansprüche 13 bis 15, **dadurch gekennzeichnet, dass** innerhalb einer von dem Haftklebstoff (2) gebildeten Schicht Verstärkungsfäden (3, 3') angeordnet sind.

## Claims

1. Plastic film for an adhesive tape having at least one first film layer (1) which forms at least one film surface, **characterized in that** the first film layer (1) comprises a mixture of a thermoplastic polyolefin elastomer (TPE-O) and ethylene vinyl acetate grafted with maleic acid anhydride (EVA-MAH).

2. The plastic film according to claim 1, **characterized in that** a polypropylene copolymer (PP-CO), in particular a polypropylene random copolymer (PP-RC) is provided as polyolefin elastomer (TPE-O).

3. The plastic film according to claim 1 or 2, **characterized in that** the thermoplastic polyolefin elastomer (TPE-O) has an elastic modulus in accordance with ISO 178 of less than 400 Mpa (Megapascal).

4. The plastic film according to any one of claims 1 to 3, **characterized in that** the first film (1) consists of polypropylene copolymer (PP-CO), ethylene vinyl acetate grafted with maleic acid anhydride (EVA-MAH) and the remainder additives.

5. The plastic film according to any one of claims 1 to 4, **characterized in that** this is configured as a monofilm.

6. The plastic film according to any one of claims 1 to 5, **characterized by** a thickness between 40 and 140 micron (µm).

7. The plastic film according to any one of claims 1 to 6, **characterized in that** the fraction of thermoplastic polyolefin elastomer (TPE-O) in the first film layer (1) is between 30 and 65 wt.%.

8. The plastic film according to any one of claims 1 to 7, **characterized in that** the fraction of ethylene vinyl acetate grafted with maleic acid anhydride (EVA-MAH) in the first film layer (1) is between 30 and 65 wt.%.

9. The plastic film according to any one of claims 1 to 8, **characterized in that** in the first film layer (1) the mass ratio of thermoplastic polyolefin elastomer (TPE-O) and ethylene vinyl acetate grafted with maleic acid anhydride (EVA-MAH) is between 2:1 and 1:2.

10. The plastic film according to any one of claims 1 to 9, **characterized in that** the thermoplasic polyolefin elastomer (TPE-O) has a hardness of less than 40 Shore D at room temperature.

11. The plastic film according to any one of claims 1 to 10, **characterized in that** this is formed by blow film extrusion.

12. The plastic film according to any one of claims 1 to 11, **characterized by** a temperature resistance of up 150°C.

13. Adhesive tape with a plastic film according to any one of claims 1 to 12 and having a coating of pressure-sensitive adhesive (2) applied to the first film layer (1).

14. The adhesive tape according to claim 13, **characterized by** a water vapour permeability between 4 and 12 g/(m²d) at 23°C and 90% air humidity according to DIN 53122.

15. The adhesive tape according to claim 13 or 14, **characterized in that** the pressure-sensitive adhesive (2) is a butyl dispersion adhesive.

16. The adhesive tape according to any one of claims 13 to 15, **characterized in that** reinforcing threads (3, 3') are arranged inside a layer formed by the pressure-sensitive adhesive (2).

## Revendications

1. Film plastique pour un ruban adhésif comprenant au moins une première couche de film (1), laquelle forme au moins une surface de film, **caractérisé en ce que** la première couche de film (1) présente un mélange d'un élastomère thermoplastique polyoléfine (TPE-O) et d'un éthylène-acétate de vinyle implanté d'anhydride maléique (EVA-MAH).

2. Film plastique selon la revendication 1, **caractérisé en ce qu'**un copolymère de polypropylène (PP-CO), en particulier un copolymère de polypropylène « random » (PP-RC) est prévu en tant qu'élastomère thermoplastique polyoléfine (TPE-O).

3. Film plastique selon la revendication 1 ou 2, **caractérisé en ce que** l'élastomère thermoplastique polyoléfine (TPE-O) présente un module d'élasticité inférieur à 400 Mpa (Megapascal) selon la norme ISO 178.

4. Film plastique selon l'une des revendications 1 à 3, **caractérisé en ce que** la première couche de film (1) est en copolymère de polypropylène (PP-CO) avec de l'éthylène-acétate de vinyle implanté d'anhydride maléique (EVA-MAH) et des additifs restants.

5. Film plastique selon l'une des revendications 1 à 4, **caractérisé en ce que** celui-ci est conçu en tant que monofilm.

6. Film plastique selon l'une des revendications 1 à 5, **caractérisé par** une épaisseur entre 40 et 140 micromètres (µm).

7. Film plastique selon l'une des revendications 1 à 6, **caractérisé en ce que** la teneur d'élastomère thermoplastique polyoléfine (TPE-O) dans la première couche de film (1) est située entre 30 et 65 % en poids.

8. Film plastique selon l'une des revendications 1 à 7, **caractérisé en ce que** la teneur d'éthylène-acétate de vinyle implanté d'anhydride maléique (EVA-MAH) dans la première couche de film (1) est située entre 30 et 65 % en poids.

9. Film plastique selon l'une des revendications 1 à 8, **caractérisé en ce que** dans la première couche de film (1), le rapport massique de l'élastomère thermoplastique polyoléfine (TPE-O) et de l'éthylène-acétate de vinyle implanté d'anhydride maléique (EVA-MAH) est situé entre 2:1 et 1:2.

10. Film plastique selon l'une des revendications 1 à 9, **caractérisé en ce que** l'élastomère thermoplastique polyoléfine (TPE-O) présente une dureté shore D inférieure à 40 à température ambiante.

11. Film plastique selon l'une des revendications 1 à 10, **caractérisé en ce que** celui-ci est formé par extrusion de film soufflé.

12. Film plastique selon l'une des revendications 1 à 11, **caractérisé par** une résistance à la température jusqu'à 150°C.

13. Ruban adhésif comprenant un film plastique selon l'une des revendications 1 à 12 et un revêtement d'un adhésif par pression (2) appliqué sur la première couche de film (1).

14. Ruban adhésif selon la revendication 13, **caractérisé par** une perméabilité à la vapeur d'eau entre 4 et 12 g/(m²d) à 23°C et 90 % d'humidité de l'air selon la norme DIN 53122.

15. Ruban adhésif selon la revendication 13 ou 14, **caractérisé en ce que** l'adhésif par pression (2) est un adhésif de butyle en dispersion.

16. Ruban adhésif selon l'une des revendications 13 à 15, **caractérisé en ce que** des fils de renfort (3, 3') sont disposés à l'intérieur d'une couche formée par l'adhésif par pression (2).
